# EUROPÄISCHE PATENTSCHRIFT

(11) **EP 4 423 418 B1**
(45) Veröffentlichungstag und Bekanntmachung des Hinweises auf die Patenterteilung: **04.03.2026**
(21) Anmeldenummer: 22799943.0
(22) Anmeldetag: 06.10.2022
(51) Int. Cl.: F16L 37/252, F16L 37/088, F16L 37/14

(54) **VORRICHTUNG ZUM ARRETIEREN EINES BAJONETTVERSCHLUSSES**
DEVICE FOR LOCKING A BAYONET CLOSURE
DISPOSITIF DE VERROUILLAGE D'UNE FERMETURE À BAÏONNETTE

(30) Priorität: 25.10.2021 DE 102021127685
(43) Veröffentlichungstag der Anmeldung: 04.09.2024
(73) Patentinhaber: NORMA Germany GmbH, 63477 Maintal (DE)
(72) Erfinder: STACH, Michal, 42-436 Pilica (PL); KULIG, Przemyslaw, 42-436 Pilica (PL)
(74) Vertreter: Kusche, Robert
(86) Internationale Anmeldenummer: PCT/EP2022/077845
(87) Internationale Veröffentlichungsnummer: WO 2023/072551

(56) Entgegenhaltungen:
- EP-A1- 4 019 818
- US-A- 5 301 985
- US-A- 5 333 915
- US-A1- 2011 148 107
- US-A1- 2021 262 600

## Beschreibung

Die Erfindung betrifft eine Vorrichtung zum Arretieren eines Bajonettverschlusses.

Fluidleitungen werden verwendet, um Fluide in Vorrichtungen, wie z. B. Fahrzeugen zwischen verschiedenen Positionen zu führen. Dabei können bei der Montage der Vorrichtungen mehrere Fluidleitungen zu einer gemeinsamen Fluidleitung zusammengefügt werden. Zum Verbinden der Fluidleitungen werden die Endstücke der Fluidleitungen mit Kupplungsstücken verbunden. Die Kupplungsstücke können an Verbindungsstücke befestigt werden, mit denen die Fluidleitungen in fluidkommunizierender Weise miteinander verbunden werden können.

Aus der US 5 301 985 A ist eine Schlauchkupplungsbaugruppe zum Verbinden zweier Enden eines Schlauchs bekannt. Aus der US 5 333 915 A ist eine Kupplung bekannt, die zwei komplementäre Kupplungshälften umfasst, die so konstruiert sind, dass sie miteinander verbunden werden können, um Schlauchabschnitte miteinander zu verbinden.

Dabei ist aus DE 10 2020 105 395 A1 bekannt, die Kupplungsstücke mittels eines Bajonettverschlusses an dem Verbindungsstück zu befestigen. Auf diese Weise kann eine Schnellkupplung der Fluidleitungen erfolgen.

Zur Sicherung der Verbindung zwischen dem Kupplungsstück und dem Verbindungsstück können das Kupplungsstück und das Verbindungsstück miteinander verschweißt werden. Dazu kann ein Schweißring innerhalb des Verbindungsstücks angeordnet sein.

Aufgabe der Erfindung ist es, eine verbesserte Vorrichtung zu schaffen, die eine vereinfachte Montage erlaubt und kostengünstig ist.

Hauptmerkmale der Erfindung sind im kennzeichnenden Teil von Anspruch 1 angegeben. Ausgestaltungen sind Gegenstand der Ansprüche 2 bis 7.

Bei einer Vorrichtung zum Arretieren eines Bajonettverschlusses, wobei die Vorrichtung einen ersten Verbindungspartner mit mindestens einem Kopplungsvorsprung zum Verriegeln der Verbindung und einen zweiten Verbindungspartner mit mindestens einem Kopplungskanal aufweist, wobei der mindestens eine Kopplungsvorsprung und der Kopplungskanal einen Bajonettverschluss bilden, wobei der mindestens eine Kopplungsvorsprung mittels einer Bewegung entlang einer Längsachse des zweiten Verbindungspartners und eine anschließende Drehung in eine erste Umfangsrichtung um die Längsachse in den mindestens einen Kopplungskanal einführbar ist, ist erfindungsgemäß vorgesehen, dass der erste Verbindungspartner mindestens einen ersten Sicherungspartner aufweist und der zweite Verbindungspartner mindestens einen zweiten Sicherungspartner aufweist, wobei der mindestens eine erste Sicherungspartner und der mindestens eine zweite Sicherungspartner zum Arretieren einer Drehung in einer der ersten Umfangsrichtung gegenläufigen zweiten Umfangsrichtung ausgebildet sind, wenn der mindestens eine Kopplungsvorsprung mittels der Bewegung entlang der Längsachse und der Drehung in der ersten Umfangsrichtung in den mindestens einen Kopplungskanal eingeführt ist.

Mit der Erfindung wird eine Schnellkupplung zwischen dem ersten Verbindungspartner und dem zweiten Verbindungspartner bereitgestellt, die durch den mindestens einen ersten Sicherungspartner und den mindestens einen zweiten Sicherungspartner in einem verbundenen Zustand gesichert wird. Die Verbindung zwischen dem ersten Verbindungspartner und dem zweiten Verbindungspartner kann nicht gelöst werden, ohne dass der mindestens eine erste Sicherungspartner und der mindestens eine zweite Sicherungspartner voneinander gelöst werden. Der erste Verbindungspartner und der zweite Verbindungspartner werden dabei mittels eines Bajonettverschlusses miteinander verbunden. Der mindestens eine Kopplungsvorsprung des ersten Verbindungspartners und der mindestens eine Kopplungskanal des zweiten Verbindungspartners werden durch eine Steck-Dreh-Bewegung miteinander gekoppelt. Dazu weist der mindestens eine Kopplungskanal einen ersten Kanalabschnitt, der sich entlang einer Längsachse des zweiten Verbindungspartners erstreckt, und einen zweiten Kanalabschnitt, der sich zumindest teilweise um die Längsachse herum erstreckt, auf. Der erste Kanalabschnitt und der zweite Kanalabschnitt können über eine Ecke miteinander verbunden sein. Der mindestens eine Kopplungsvorsprung weist analog einen ersten Vorsprungabschnitt und einen zweiten Vorsprungabschnitt auf. Der erste Vorsprungabschnitt erstreckt sich parallel zur Längsachse und der zweite Vorsprungabschnitt erstreckt sich um die Längsachse, wobei der erste und zweite Vorsprungabschnitt über eine Ecke miteinander verbunden sein können. Der mindestens eine Kopplungsvorsprung wird dann zunächst entlang der Längsachse des zweiten Verbindungspartners in den ersten Kanalabschnitt eingesteckt. An der Ecke kann der mindestens eine Kopplungsvorsprung durch eine Drehung um die Längsachse des zweiten Verbindungspartners in eine erste Umfangsrichtung um die Längsachse in den zweiten Kanalabschnitt eingeführt werden. Sobald der mindestens eine Kopplungsvorsprung seine Endstellung in dem mindestens einen Kopplungskanal erreicht, wirken der erste Sicherungspartner am ersten Verbindungspartner und der zweite Sicherungspartner am zweiten Verbindungspartner miteinander zusammen. Dabei arretieren sie eine Drehung des mindestens einen Kopplungsvorsprungs in einer zweiten Umfangsrichtung, die gegenläufig zu der ersten Umfangsrichtung ist. Der mindestens eine Kopplungsvorsprung kann daher nicht ohne ein Lösen der Arretierung durch den ersten und zweiten Sicherungspartner aus dem mindestens einen Kopplungskanal bewegt werden. Die Vorrichtung kann dabei eine Vielzahl von Kopplungsvorsprünge aufweisen. Weiter weist die Vorrichtung dann einen der Anzahl der Kopplungsvorsprünge entsprechende Anzahl an Kopplungskanäle auf. Z. B. kann die Vorrichtung vier Kopplungsvorsprunge und vier Kopplungskanäle aufweisen. Die Kopplung zwischen dem ersten und zweiten Verbindungspartner kann damit auf einfache Weise arretiert werden. Ein Verschweißen der Kopplung ist nicht notwendig. Damit wird weiter keine kostenintensive Schweißvorrichtung benötigt. Weiter können die Toleranten des ersten und zweiten Verbindungspartners reduziert werden so dass die Kopplung mit geringerem Kraftaufwand herbeigeführt werden kann. Durch die Erfindung wird damit eine verbesserte Vorrichtung geschaffen, die eine vereinfachte Montage erlaubt und kostengünstig ist.

Gemäß einem Beispiel können der mindestens eine erste Sicherungspartner und der mindestens eine zweite Sicherungspartner in Richtung der zweiten Umfangsrichtung eine Hinterschneidung bilden, wenn der mindestens eine Kopplungsvorsprung mittels der Bewegung entlang der Längsachse und der Drehung in ersten Umfangsrichtung in den mindestens einen Kopplungskanal eingeführt ist.

Sobald der mindestens eine Kopplungsvorsprung mit dem mindestens einen Kopplungskanal gekoppelt ist, können der erste Sicherungspartner und der zweite Sicherungspartner über die Hinterschneidung aneinander anliegen. In der zweiten Umfangsrichtung sind der erste und zweite Sicherungspartner dann über einen Formschluss miteinander verbunden.

Gemäß einem weiteren Beispiel können der mindestens eine erste Sicherungspartner und der mindestens eine zweite Sicherungspartner eine Rastverbindung bilden, wenn der mindestens eine Kopplungsvorsprung mittels der Bewegung entlang der Längsachse und der Drehung in der ersten Umfangsrichtung in den mindestens einen Kopplungskanal eingeführt ist.

Mit der Rastverbindung wird beim Einrasten ein akustisches Signal ausgegeben, mit dem einem Benutzer die Arretierung angezeigt werden kann. Damit wird die Sicherheit bei der Montage der Vorrichtung weiter erhöht. Der mindestens eine erste Sicherungspartner kann beispielsweise eine Rastnase aufweisen.

In einem weiteren Beispiel kann der mindestens eine erste Sicherungspartner einen Rasthebel aufweisen und der mindestens eine zweite Sicherungspartner kann eine Rastnase aufweisen.

Der mindestens eine erste Sicherungspartner kann in diesem Beispiel beim Koppel des mindestens einen Kopplungsvorsprungs mit dem mindestens einen Kopplungskanal gespannt werden. Dabei kann der Rasthebel die Rastnase beim Einführen des mindestens einen Kopplungsvorsprung in den mindestens einen Kopplungskanal überqueren. Bei Vollendung der Kopplung zwischen dem mindestens einen Kopplungsvorsprung und dem mindestens einen Kopplungskanal kann der Rasthebel entspannt werden und an der Rastnase einrasten. Dazu kann entlang der ersten Umfangsrichtung gesehen hinter der Rastnase eine Ausnehmung am mindestens einen Kopplungskanal vorgesehen sein, in die der Rasthebel durch die Vorspannung bewegt wird, nachdem der Rasthebel die Rastnase überwunden hat.

Der mindestens eine erste Sicherungspartner ist am mindestens einen Kopplungsvorsprung angeordnet.

Damit sind der mindestens eine erste Sicherungspartner und der mindestens eine Kopplungsvorsprung unmittelbar miteinander verbunden. Sie können dann einstückig hergestellt werden. Weiter kann damit die Stabilität des ersten Sicherungspartners erhöht werden.

Der erste Sicherungspartner ist in der ersten Umfangsrichtung an einem hinteren Endabschnitt des Kopplungsvorsprungs angeordnet.

Bei dem Versuch, die arretierte Kopplung zwischen dem ersten Verbindungspartner und dem zweiten Verbindungspartner zu lösen, entsteht eine Druckkraft auf den ersten Sicherungspartner, die den ersten Sicherungspartner gegen den Kopplungsvorsprung drückt. Damit weist der erste Sicherungspartner eine erhöhte Stabilität auf.

Gemäß einem Beispiel kann der mindestens eine zweite Sicherungspartner am mindestens einen Kopplungskanal angeordnet ist.

Damit kann auf einfache und sichere Weise eine Arretierung zwischen dem ersten und zweiten Sicherungspartner durchgeführt werden. Ein eigener Kanal für den ersten Sicherungspartner ist damit nicht notwendig. Weiter sind der erste und zweite Sicherungspartner durch den Kopplungskanal geschützt, wenn sie die Kopplung arretieren. Ein versehentliches Lösen der Arretierung wird damit vermieden.

Gemäß einem anderen Beispiel kann der mindestens eine zweite Sicherungspartner getrennt von dem mindestens einen Kopplungskanal am zweiten Verbindungspartner angeordnet sein.

Für den ersten Sicherungspartner kann in diesem Fall ein eigener Kanal, an dem dann der zweite Sicherungspartner angeordnet ist vorgesehen werden. Alternativ können der erste Sicherungspartner und der zweite Sicherungspartner an einer Außenfläche der Vorrichtung miteinander zusammenwirken, wenn der mindestens eine Kopplungsvorsprung mittels der Bewegung entlang der Längsachse und der Drehung in der ersten Umfangsrichtung in den mindestens einen Kopplungskanal eingeführt ist.

In einem weiteren Beispiel kann der erste Verbindungspartner ein Kupplungsstück für eine Fluidleitung aufweisen und der zweite Verbindungspartner ein Verbindungsstück für Fluidleitungen aufweisen.

Die Fluidleitungen können in einem Fahrzeug verwendet werden, um z. B. verschiedene Komponenten eines Kühlfluidkreislaufes fluidkommunizierend miteinander zu verbinden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung einer erfindungsgemäßen Vorrichtung in einer Explosionsansicht;
- Fig. 2a, b: eine schematische Darstellung der Vorrichtung;
- Fig. 3: eine schematische Schnittdarstellung der Vorrichtung;
- Fig. 4a-d: eine schematische Darstellung der Abfolge zum Verbinden der Verbindungspartner;
- Fig. 5: eine schematische Darstellung eines alternativen, nicht unter die Ansprüche fallenden Beispiels des ersten Verbindungspartners; und
- Fig. 6a, b: eine schematische Darstellung eines weiteren alternativen, jedoch erfindungsgemäßen Beispiels des ersten Verbindungspartners.

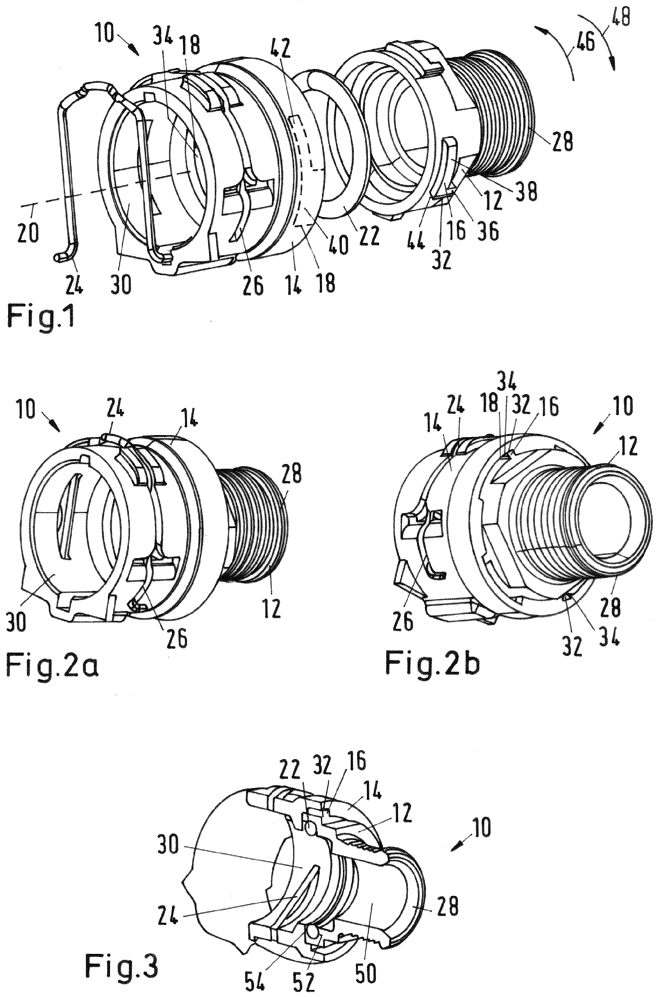

Die Vorrichtung zum Arretieren eines Bajonettverschlusses wird gemäß Figur 1 in ihrer Gesamtheit mit dem Bezugszeichen 10 referenziert. Das Beispiel in Figur 1 zeigt dabei eine Explosionsdarstellung der Bauteile der Vorrichtung 10.

Die Vorrichtung 10 weist einen ersten Verbindungspartner 12 und einen zweiten Verbindungspartner 14 auf. Weiter kann die Vorrichtung zwischen dem ersten und zweiten Verbindungspartner 12, 14 ein Dichtelement 22 aufweisen.

Der erste Verbindungspartner 12 kann als Kupplungsstück 28 für eine Fluidleitung ausgebildet sein. Ein erster Endabschnitt des Kupplungsstücks 28 kann dann in eine Öffnung der Fluidleitung gesteckt werden, um die Fluidleitung mit dem Kupplungsstück 28 zu verbinden.

Der erste Verbindungspartner 12 weist mindestens einen Kopplungsvorsprung 16 auf, der am dem ersten Endabschnitt gegenüberliegenden Endabschnitt des Kupplungsstücks 28 angeordnet sein kann. In dem Beispiel nach Figur 1 weist der erste Verbindungspartner 12 vier Kopplungsvorsprünge 16 auf, die auf dem Umfang des ersten Verbindungspartners 12 in gleichem Abstand voneinander verteilt angeordnet sind.

In diesem Beispiel weist der Kopplungsvorsprung eine L-Form auf, mit einem ersten Vorsprungabschnitt 36, der sich entlang der Längsachse 20 erstreckt und einem zweiten Vorsprungabschnitt 38, der sich um die Längsachse 20 erstreckt. Der erste Vorsprungabschnitt 36 und der zweite Vorsprungabschnitt 38 können über eine Ecke miteinander verbunden sein.

Der zweite Verbindungspartner 14 kann ein Verbindungsstück 30 aufweisen, das mit einem anderen Verbindungsstück gekoppelt werden kann, das mit einer weiteren Fluidleitung verbunden ist. Zur Sicherung der Kopplung zwischen dem Verbindungsstück 30 und dem anderen Verbindungsstück kann eine Klammer 24 vorgesehen werden.

Der zweite Verbindungspartner 14 weist weiter einen Kopplungskanal 18 auf, der in einer Innenwand einer Öffnung des zweiten Verbindungspartners 14 angeordnet sein kann. Der Kopplungskanal 18 weist einen ersten Kanalabschnitt 40 und einen zweiten Kanalabschnitt 42 auf. Der erste Kanalabschnitt 40 erstreckt sich parallel zur Längsachse 20 und der zweite Kanalabschnitt 42 erstreckt sich um die Längsachse. Die beiden Kanalabschnitte 40, 42 können über eine Ecke miteinander verbunden sein.

Die Breite des ersten Kanalabschnitts 40 in Umfangsrichtung um die Längsachse 20 entspricht der Ausdehnung des Kopplungsvorsprungs 16 in Umfangsrichtung um die Längsachse 20.

Die Ausdehnung des zweiten Kanalabschnitts 42 in Umfangsrichtung um die Längsachse 20 entspricht der Ausdehnung des zweiten Vorsprungabschnitts 38 in Umfangsrichtung um die Längsachse 20. Der zweite Kanalabschnitt 42 kann den zweiten Vorsprungabschnitt 38 daher aufnehmen.

Der mindestens eine Kopplungsvorsprung 16 kann daher mittels einer Steckbewegung entlang der Längsachse und einer anschließenden Drehbewegung in eine erste Umfangsrichtung 46 um die Längsachse in den Kopplungskanal 18 eingeführt werden. Die Kopplung zwischen dem ersten Verbindungspartner 14 und dem zweiten Verbindungspartner 16 erfolgt damit mittels einer Steck-Dreh-Bewegung. Der Kopplungsvorsprung 16 und der Kopplungskanal 18 bilden damit einen Bajonettverschluss.

Damit kann eine mit dem ersten Verbindungspartner 12 bzw. dem Kupplungsstück 28 verbundene Fluidleitung fluidkommunizierend mit dem Verbindungsstück 30 verbunden werden.

Weiter weist der erste Verbindungspartner 12 mindestens einen ersten Sicherungspartner 32 auf, der in diesem Beispiel am mindestens einen Kopplungsvorsprung 16 befestigt ist.

Der zweite Verbindungspartner 14 weist mindestens einen zweiten Sicherungspartner 34 auf, der in diesem Beispiel an dem Kopplungskanal 18 angeordnet ist.

Der erste Sicherungspartner 32 und der zweite Sicherungspartner 34 wirken zusammen, wenn der mindestens eine Kopplungsvorsprung 16 mittels der Bewegung entlang der Längsachse 20 und der Drehung in die erste Umfangsrichtung 46 in den mindestens einen Kopplungskanal 18 eingeführt ist. Dann bewirken die beiden Sicherungspartner 32, 34 eine Arretierung der Kopplung zwischen dem ersten Verbindungspartner 12 und dem zweiten Verbindungspartner 14. Die Arretierung kann dadurch bewirkt werden, dass eine Drehung entgegen der ersten Umfangsrichtung 46, d. h. in eine zweite Umfangsrichtung 48, blockiert. bzw. verhindert wird.

Der erste Verbindungspartner 12 kann genauso viele erste Sicherungspartner 32 wie Kopplungsvorsprünge 16 aufweisen. Jeweils ein erster Sicherungspartner 32 ist dann mit jeweils einem Kopplungsvorsprung 16 verbunden.

Die miteinander gekoppelten Verbindungspartner 12, 14 sind in den Figuren 2a und 2b dargestellt.

In Figur 2a ist eine Ansicht in eine Öffnung des Verbindungsstücks 30 dargestellt. In diese Öffnung kann ein anderes Verbindungsstück eingeführt werden, das mit einer anderen Fluidleitung verbunden ist. In der Ansicht aus Figur 2a ist die Klammer 24 in einen Schlitz 26 des Verbindungsstücks 14 eingeführt.

Figur 2b zeigt eine Ansicht auf eine Öffnung des Kopplungsstücks 28, die der Öffnung des Verbindungsstücks 30 gegenüberliegt, wenn die beiden Verbindungspartner 12, 14 miteinander gekoppelt sind.

Weiter sind die beiden Sicherungspartner 32, 34 sichtbar. Der mindestens eine erste Sicherungspartner 32 und der zweite Sicherungspartner 34 sind in diesem Beispiel als Rastnasen ausgebildet. Der erste Sicherungspartner 32 ist am ersten Vorsprungabschnitt 36 an einem Endabschnitt 44 des Kopplungsvorsprungs 16 angeordnet, wobei der Endabschnitt 44 in der ersten Umfangsrichtung 46 um die Längsachse 20 hinten am ersten Vorsprungabschnitt 36 angeordnet ist.

Die beiden Sicherungspartner 32, 34 formen in diesem Beispiel in der zweiten Umfangsrichtung 48 einen Hinterschnitt. Dabei weisen beide Sicherungspartner 32, 34 je eine radial verlaufende Kante. Die beiden Kanten der Sicherungspartner 32, 34 liegen aneinander an, wenn der mindestens eine Kopplungsvorsprung 16 mittels der Bewegung entlang der Längsachse 20 und der Drehung in die erste Umfangsrichtung 46 in den mindestens einen Kopplungskanal 18 eingeführt ist. Sie bilden damit einen Formschluss in der zweiten Umfangsrichtung 48.

Der erste Vorsprungabschnitt 36 und damit auch der hintere Endabschnitt 44 liegen in einem Eingangsbereich des ersten Kanalabschnitts 42 an. Insbesondere der erste Sicherungspartner 32 ist damit von außen zugänglich angeordnet, so dass der Hinterschnitt zwischen dem ersten Sicherungspartner 32 und dem zweiten Sicherungspartner 34 mittels eines Werkzeugs überwunden werden kann, um die Arretierung zu lösen.

In Figur 3 ist eine Schnittdarstellung der Vorrichtung dargestellt, wobei bei der Kopplung der beiden Verbindungspartner 12, 14 ein Dichtungselement 22 zwischen den Verbindungspartnern 12, 14 angeordnet werden kann. Das Dichtungselement 22 ist an einer Aufnahme 52 des ersten Verbindungspartners 14 gelagert, die an einer Innenwand 50 des Kupplungsstücks 28 angeordnet ist. Dabei ragt das Dichtungselement 22 entlang der Längsrichtung 20 zum Teil über die Aufnahme 52 hinaus. Bei einer Kopplung zwischen dem ersten und zweiten Verbindungspartner 12, 14 liegt der Teil des Dichtungselements 22, der in Längsrichtung 20 aus der Aufnahme 52 herausragt an einer Anlagefläche 54 des zweiten Verbindungspartners 14 an. Dabei wird ein bei der Kopplung der beiden Verbindungspartner 12, 14 möglicherweise verbleibender nach außen führender Spalt zwischen den beiden Verbindungspartnern 12, 14 fluiddicht abgedichtet.

Damit haben die Abschnitte der ersten und zweiten Verbindungspartners 12, 14, die an den möglichen Spalt zwischen den beiden Verbindungspartnern 12, 14 angrenzen, keinen Kontakt mit dem durch die Verbindungspartner 12, 14 fließendem Fluid. Diese Abschnitte können daher andere Materialeigenschaften aufweisen als Abschnitte der Verbindungspartner 12, 14, die Kontakt zu dem Fluid haben.

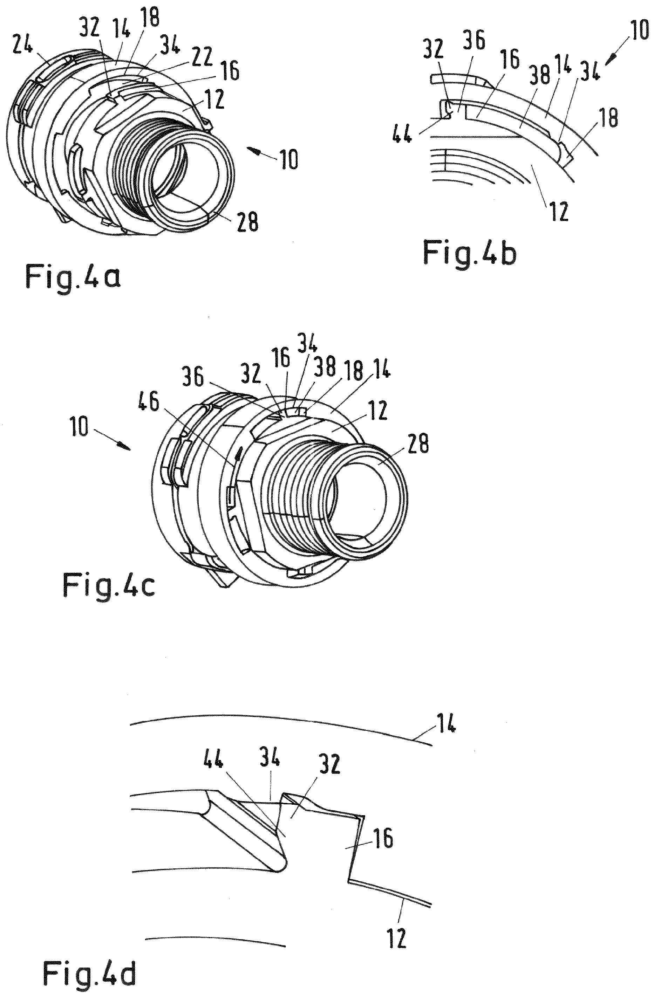

In den Figuren 4a bis 4d wird der Kopplungsvorgang zwischen dem ersten Verbindungspartner 12 und dem zweiten Verbindungspartner 14 näher erläutert.

In Figur 4a sind die beiden Verbindungspartner 12, 14 voneinander getrennt. Der erste Verbindungspartner 12 und der zweite Verbindungspartner 14 sind derart zueinander ausgerichtet, dass die Kopplungsvorsprünge 16 und die ersten Kanalabschnitte 40 parallel zur Längsachse 20 miteinander fluchten.

Figur 4b zeigt dazu eine Detailansicht parallel zur Längsachse 20 in den ersten Kanalabschnitt 40. Der Kopplungsvorsprung 16 kann in dieser Anordnung in den ersten Kanalabschnitt 40 des Kopplungskanals 18 mittels einer Bewegung des ersten Verbindungspartner 12 parallel zur Längsachse eingeführt werden. Die Sicherungspartner 32, 34 sind in diesem Fall in einem Abstand zu einander angeordnet und wirken nicht zusammen.

Nach dem Einführen des Kopplungsvorsprungs 16 in den ersten Kanalabschnitt 40 kann durch eine Drehung des ersten Verbindungspartners 12 in der ersten Umfangsrichtung 46 der zweite Vorsprungabschnitt 38 in den zweiten Kanalabschnitt 42 eingeführt werden, wie in Figur 4c dargestellt ist. Die Sicherungspartner 32, 34 wirken beim Einführen nicht zusammen, da sie weiter beabstandet voneinander angeordnet ist. Beim Drehen des ersten Verbindungspartners 12 werden die beiden Sicherungspartner 32, 34 zueinander bewegt.

Die Drehung in der ersten Umfangsrichtung 46 kann solange erfolgen, bis der zweite Vorsprungabschnitt 38 vollständig in den zweiten Kanalabschnitt 42 eingeführt wurde. Bevor der zweite Vorsprungabschnitt 38 vollständig in den zweiten Kanalabschnitt 42 eingeführt wurde, überstreicht der erste Sicherungspartner 32, der in diesem Beispiel als Rastnase ausgebildet ist, den zweiten Sicherungspartner 34.

Wenn der zweite Vorsprungabschnitt 38 vollständig in den zweiten Kanalabschnitt 42 eingeführt wurde, rastet der erste Sicherungspartner 32 am zweiten Sicherungspartner 34 ein, wie in Fig. 4d dargestellt ist. In einer Ansicht entlang der ersten Umfangsrichtung 46 hinterschneidet eine radial zur Längsachse 20 ausgerichtete Kante des ersten Sicherungspartners 32 eine radial zur Längsachse 20 ausgerichtete Kante des zweiten Sicherungspartners 34. Die Kanten können auch eine andere Ausrichtung aufweisen.

Der durch den mindestens einen Kopplungsvorsprung 16 und den mindestens einen Kopplungskanal 18 gebildete Bajonettverschluss wird dann durch die beiden Sicherungspartner 32, 34 arretiert.

In diesem Beispiel ist der erste Sicherungspartner 32 an dem hinteren Endabschnitt 44 des ersten Vorsprungabschnitts 36 angeordnet und ragt in den Eingangsbereich des ersten Kanalabschnitts 42.

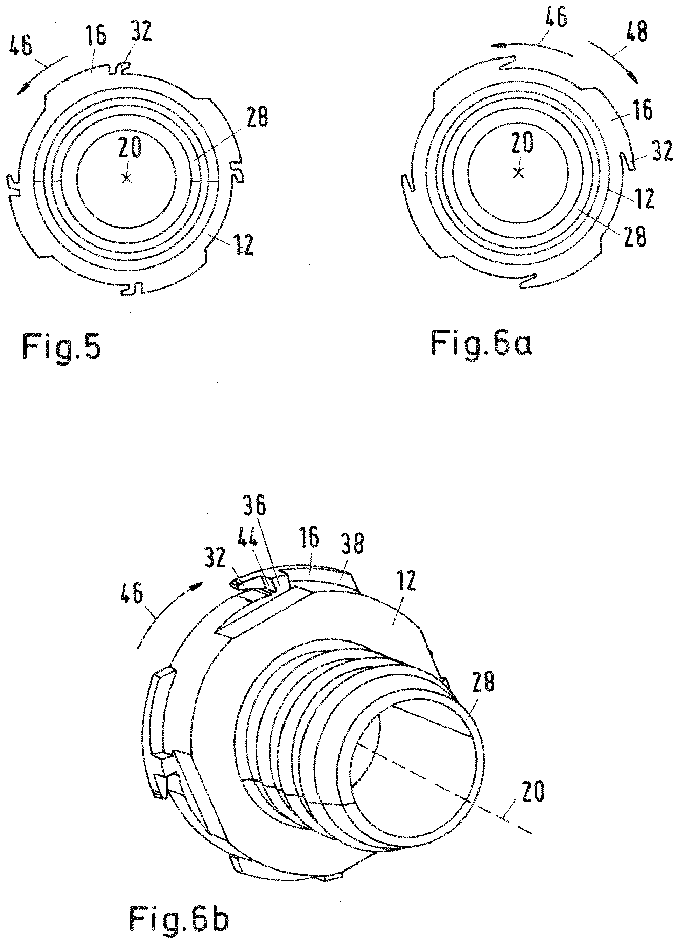

Figur 5 stellt ein weiteres, jedoch nicht unter die Ansprüche fallendes Ausführungsbeispiel der Vorrichtung 10 dar. In diesem Beispiel sind die ersten Sicherungspartner 32 getrennt von den Kopplungsvorsprüngen 16 angeordnet. Weiter sind die ersten Sicherungspartner 32 als Rasthebel ausgebildet.

In den Figuren 6a und 6b wird ein drittes, nun erfindungsgemäßes Ausführungsbeispiel der Vorrichtung 10 dargestellt.

Darin sind die ersten Sicherungspartner 32 als Rasthebel ausgebildet, die mit den Kopplungsvorsprüngen 16 verbunden sind, wie in Figur 6a dargestellt ist. Die ersten Sicherungspartner 32 ragen dabei entlang der zweiten Umfangsrichtung 48 von dem hinteren Endabschnitt 44 des ersten Vorsprungabschnitts 36 ab.

Gemäß Figur 6b können die als Rasthebel ausgebildeten ersten Sicherungspartner 32 als Verlängerung der zweiten Vorsprungabschnitte 38 in die zweite Umfangsrichtung 48 ragen. Weiter können die ersten Sicherungspartner 32 sich parallel zur Längsachse 20 lediglich entlang eines Teils des ersten Vorsprungabschnitts 36 erstrecken. Nach dem Einführen der Kopplungsvorsprünge 16 in die ersten Kanalabschnitte 40 sind die ersten Sicherungspartner 32 innerhalb des Kopplungskanals 18 in einem Abstand von dem Eingangsbereich des ersten Kanalabschnitts 40 angeordnet.

Wenn der Bajonettverschluss arretiert ist, können die ersten Sicherungspartner 32 im Vergleich zu den Ausführungsbeispielen, in denen sie sich bis in den Eingangsbereich erstecken, lediglich mit erhöhten Aufwand von einem Werkzeug von außen erreicht werden. Eine Lösung der Arretierung kann damit lediglich mit erhöhten Aufwand bewirkt werden, so dass sich die Verbindungssicherheit zwischen dem ersten Verbindungspartner 12 und dem zweiten Verbindungspartner 14 erhöht.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Vorrichtung zum Arretieren eines Bajonettverschlusses
- 12: erster Verbindungspartner
- 14: zweiter Verbindungspartner
- 16: Kopplungsvorsprung
- 18: Kopplungskanal
- 20: Längsachse
- 22: Dichtelement
- 24: Klammer
- 26: Schlitz
- 28: Kupplungsstück
- 30: Verbindungsstück
- 32: ersten Sicherungspartner
- 34: zweiter Sicherungspartner
- 36: erster Vorsprungabschnitt
- 38: zweiter Vorsprungabschnitt
- 40: erster Kanalabschnitt
- 42: zweiter Kanalabschnitt
- 44: Endabschnitt
- 46: erste Umfangsrichtung
- 48: zweite Umfangsrichtung
- 50: Innenwand
- 52: Aufnahme
- 54: Anlagefläche

## Patentansprüche

1. Vorrichtung zum Arretieren eines Bajonettverschlusses, wobei die Vorrichtung (10) einen ersten Verbindungspartner (12) mit mindestens einem Kopplungsvorsprung (16) zum Verriegeln der Verbindung und einen zweiten Verbindungspartner (14) mit mindestens einem Kopplungskanal (18) aufweist, wobei der mindestens eine Kopplungsvorsprung (16) und der Kopplungskanal (18) einen Bajonettverschluss bilden, wobei der mindestens eine Kopplungsvorsprung (16) mittels einer Bewegung entlang einer Längsachse (20) des zweiten Verbindungspartners (14) und eine anschließende Drehung in eine erste Umfangsrichtung (46) um die Längsachse (20) in den mindestens einen Kopplungskanal (18) einführbar ist, wobei der erste Verbindungspartner (12) mindestens einen ersten Sicherungspartner (32) aufweist und der zweite Verbindungspartner (14) mindestens einen zweiten Sicherungspartner (34) aufweist, wobei der mindestens eine erste Sicherungspartner (32) und der mindestens eine zweite Sicherungspartner (34) zum Arretieren einer Drehung in einer der ersten Umfangsrichtung (46) gegenläufigen zweiten Umfangsrichtung (48) ausgebildet sind, wenn der mindestens eine Kopplungsvorsprung (16) mittels der Bewegung entlang der Längsachse (20) und der Drehung in die erste Umfangsrichtung (46) in den mindestens einen Kopplungskanal (18) eingeführt ist, wobei der Kopplungskanal (18) einen sich entlang der Längsachse (20) erstreckenden ersten Kanalabschnitt (40) und einen sich um die Längsachse (20) erstreckenden zweiten Kanalabschnitt (42) zum Aufnehmen des Kopplungsvorsprungs (16) aufweist, wobei der Kopplungsvorsprung (16) einen sich entlang der Längsachse (20) erstreckenden ersten Vorsprungabschnitt (36) und einen sich um die Längsachse (20) erstreckenden zweiten Vorsprungabschnitt (38) zum Einführen in den Kopplungskanal (18) aufweist, wobei der erste Sicherungspartner (32) an einem hinteren Endabschnitt (44) des ersten Vorsprungabschnitts (36) in der ersten Umfangsrichtung (46) angeordnet ist, **dadurch gekennzeichnet, dass** der erste Sicherungspartner (32) in den Eingangsbereich des ersten Kanalabschnitts (40) ragt und an dem zweiten Sicherungspartner (34) einrastet, wenn der zweite Vorsprungabschnitt (38) mittels Drehung in erster Umfangsrichtung (46) vollständig in den zweiten Kanalabschnitt (42) eingeführt ist.

2. Vorrichtung nach Anspruch 1, **dadurch gekennzeichnet, dass** der mindestens eine erste Sicherungspartner (32) und der mindestens eine zweite Sicherungspartner (34) in Richtung der zweiten Umfangsrichtung (48) eine Hinterschneidung bilden, wenn der mindestens eine Kopplungsvorsprung (16) mittels der Bewegung entlang der Längsachse (20) und der Drehung in die erste Umfangsrichtung (46) in den mindestens einen Kopplungskanal (18) eingeführt ist.

3. Vorrichtung nach Anspruch 1 oder 2, **dadurch gekennzeichnet, dass** der mindestens eine erste Sicherungspartner (32) und der mindestens eine zweite Sicherungspartner (34) eine Rastverbindung bilden, wenn der mindestens eine Kopplungsvorsprung (16) mittels der Bewegung entlang der Längsachse (20) und der Drehung in die erste Umfangsrichtung (46) in den mindestens einen Kopplungskanal (18) eingeführt ist.

4. Vorrichtung nach Anspruch 3, **dadurch gekennzeichnet, dass** der mindestens eine erste Sicherungspartner (32) einen Rasthebel aufweist und der mindestens eine zweite Sicherungspartner (34) eine Rastnase aufweist.

5. Vorrichtung nach einem der Ansprüche 1 bis 4, **dadurch gekennzeichnet, dass** der mindestens eine zweite Sicherungspartner (34) am mindestens einen Kopplungskanal (18) angeordnet ist.

6. Vorrichtung nach einem der Ansprüche 1 bis 5, **dadurch gekennzeichnet, dass** der mindestens eine zweite Sicherungspartner (34) getrennt von dem mindestens einen Kopplungskanal (18) am zweiten Verbindungspartner (14) angeordnet ist.

7. Vorrichtung nach einem der Ansprüche 1 bis 6, **dadurch gekennzeichnet, dass** der erste Verbindungspartner (12) ein Kupplungsstück (28) für eine Fluidleitung aufweist und der zweite Verbindungspartner (14) ein Verbindungsstück (30) für Fluidleitungen aufweist.

## Claims

1. Device for arresting a bayonet closure, wherein the device (10) has a first connecting partner (12) with at least one coupling protrusion (16) for locking the connection and a second connecting partner (14) with at least one coupling channel (18), wherein the at least one coupling protrusion (16) and the coupling channel (18) form a bayonet closure, wherein the at least one coupling protrusion (16) can be introduced into the at least one coupling channel (18) by means of a movement along a longitudinal axis (20) of the second connecting partner (14) and a subsequent rotation in a first circumferential direction (46) about the longitudinal axis (20), wherein the first connecting partner (12) has at least one first securing partner (32) and the second connecting partner (14) has at least one second securing partner (34), wherein the at least one first securing partner (32) and the at least one second securing partner (34) are designed to arrest a rotation in a second circumferential direction (48), counter to the first circumferential direction (46), when the at least one coupling protrusion (16) has been introduced into the at least one coupling channel (18) by means of the movement along the longitudinal axis (20) and the rotation in the first circumferential direction (46), wherein the coupling channel (18) has a first channel portion (40), which extends along the longitudinal axis (20), and a second channel portion (42), which extends about the longitudinal axis (20), for receiving the coupling protrusion (16), wherein the coupling protrusion (16) has a first protrusion portion (36), which extends along the longitudinal axis (20), and a second protrusion portion (38), which extends about the longitudinal axis (20), for introduction into the coupling channel (18), wherein the first securing partner (32) is arranged on a rear end portion (44) of the first protrusion portion (36), as seen in the first circumferential direction (46), **characterized in that** the first securing partner (32) projects into the entry region of the first channel portion (40) and latches in on the second securing partner (34) when the second protrusion portion (38) has been introduced all the way into the second channel portion (42) by means of rotation in the first circumferential direction (46).

2. Device according to Claim 1, **characterized in that** the at least one first securing partner (32) and the at least one second securing partner (34) form an undercut in the direction of the second circumferential direction (48) when the at least one coupling protrusion (16) has been introduced into the at least one coupling channel (18) by means of the movement along the longitudinal axis (20) and the rotation in the first circumferential direction (46).

3. Device according to Claim 1 or 2, **characterized in that** the at least one first securing partner (32) and the at least one second securing partner (34) form a latching connection when the at least one coupling protrusion (16) has been introduced into the at least one coupling channel (18) by means of the movement along the longitudinal axis (20) and the rotation in the first circumferential direction (46).

4. Device according to Claim 3, **characterized in that** the at least one first securing partner (32) has a latching lever and the at least one second securing partner (34) has a latching nose.

5. Device according to one of Claims 1 to 4, **characterized in that** the at least one second securing partner (34) is arranged on the at least one coupling channel (18).

6. Device according to one of Claims 1 to 5, **characterized in that** the at least one second securing partner (34) is arranged on the second connecting partner (14) separately from the at least one coupling channel (18).

7. Device according to one of Claims 1 to 6, **characterized in that** the first connecting partner (12) has a coupling piece (28) for a fluid line and the second connecting partner (14) has a connecting piece (30) for fluid lines.

## Revendications

1. Dispositif pour bloquer une fermeture à baïonnette, le dispositif (10) présentant un premier partenaire de liaison (12) avec au moins une saillie d'accouplement (16) pour verrouiller la liaison et un deuxième partenaire de liaison (14) avec au moins un canal d'accouplement (18), l'au moins une saillie d'accouplement (16) et le canal d'accouplement (18) formant une fermeture à baïonnette, l'au moins une saillie d'accouplement (16) pouvant être insérée dans l'au moins un canal d'accouplement (18) au moyen d'un mouvement le long d'un axe longitudinal (20) du deuxième partenaire de liaison (14) et d'une rotation consécutive dans une première direction circonférentielle (46) autour de l'axe longitudinal (20), le premier partenaire de liaison (12) présentant au moins un premier partenaire de sécurisation (32) et le deuxième partenaire de liaison (14) présentant au moins un deuxième partenaire de sécurisation (34), l'au moins un premier partenaire de sécurisation (32) et l'au moins un deuxième partenaire de sécurisation (34) étant réalisés pour bloquer une rotation dans une deuxième direction circonférentielle (48) opposée à la première direction circonférentielle (46) lorsque l'au moins une saillie d'accouplement (16) est insérée dans l'au moins un canal d'accouplement (18) au moyen du mouvement le long de l'axe longitudinal (20) et de la rotation dans la première direction circonférentielle (46), le canal d'accouplement (18) présentant une première section de canal (40) s'étendant le long de l'axe longitudinal (20) et une deuxième section de canal (42) s'étendant autour de l'axe longitudinal (20) pour recevoir la saillie d'accouplement (16), la saillie d'accouplement (16) présentant une première section de saillie (36) s'étendant le long de l'axe longitudinal (20) et une deuxième section de saillie (38) s'étendant autour de l'axe longitudinal (20) pour l'insertion dans le canal d'accouplement (18), le premier partenaire de sécurisation (32) étant agencé sur une section d'extrémité arrière (44) de la première section de saillie (36) dans la première direction circonférentielle (46), **caractérisé en ce que** le premier partenaire de sécurisation (32) fait saillie dans la zone d'entrée de la première section de canal (40) et s'enclenche sur le deuxième partenaire de sécurisation (34) lorsque la deuxième section de saillie (38) est complètement insérée dans la deuxième section de canal (42) au moyen d'une rotation dans la première direction circonférentielle (46).

2. Dispositif selon la revendication 1, **caractérisé en ce que** l'au moins un premier partenaire de sécurisation (32) et l'au moins un deuxième partenaire de sécurisation (34) forment une contre-dépouille dans la direction de la deuxième direction circonférentielle (48) lorsque l'au moins une saillie d'accouplement (16) est insérée dans l'au moins un canal d'accouplement (18) au moyen du mouvement le long de l'axe longitudinal (20) et de la rotation dans la première direction circonférentielle (46).

3. Dispositif selon la revendication 1 ou 2, **caractérisé en ce que** l'au moins un premier partenaire de sécurisation (32) et l'au moins un deuxième partenaire de sécurisation (34) forment une liaison par encliquetage lorsque l'au moins une saillie d'accouplement (16) est insérée dans l'au moins un canal d'accouplement (18) au moyen du mouvement le long de l'axe longitudinal (20) et de la rotation dans la première direction circonférentielle (46).

4. Dispositif selon la revendication 3, **caractérisé en ce que** l'au moins un premier partenaire de sécurisation (32) présente un levier d'encliquetage et l'au moins un deuxième partenaire de sécurisation (34) présente un ergot d'encliquetage.

5. Dispositif selon l'une quelconque des revendications 1 à 4, **caractérisé en ce que** l'au moins un deuxième partenaire de sécurisation (34) est agencé sur l'au moins un canal d'accouplement (18).

6. Dispositif selon l'une quelconque des revendications 1 à 5, **caractérisé en ce que** l'au moins un deuxième partenaire de sécurisation (34) est agencé séparément de l'au moins un canal d'accouplement (18) sur le deuxième partenaire de liaison (14).

7. Dispositif selon l'une quelconque des revendications 1 à 6, **caractérisé en ce que** le premier partenaire de liaison (12) présente une pièce d'accouplement (28) pour une conduite de fluide et le deuxième partenaire de liaison (14) présente une pièce de liaison (30) pour des conduites de fluide.
